# EUROPÄISCHE PATENTSCHRIFT

(11) **EP 3 652 476 B1**
(45) Veröffentlichungstag und Bekanntmachung des Hinweises auf die Patenterteilung: **14.07.2021**
(21) Anmeldenummer: 18720243.7
(22) Anmeldetag: 26.04.2018
(51) Int. Cl.: F16L 37/088

(54) **STECKKUPPLUNG FÜR EINE FLUIDLEITUNG**
PLUG-IN COUPLING FOR A FLUID LINE
RACCORD À FICHE POUR UNE CONDUITE DE FLUIDE

(30) Priorität: 13.07.2017 DE 102017212004
(43) Veröffentlichungstag der Anmeldung: 20.05.2020
(73) Patentinhaber: ContiTech MGW GmbH, 34346 Hann. Münden (DE)
(72) Erfinder: ALVENSLEBEN, Holger, 39590 Tangermünde (DE)
(74) Vertreter: Continental Corporation
(86) Internationale Anmeldenummer: PCT/EP2018/060652
(87) Internationale Veröffentlichungsnummer: WO 2019/011492

(56) Entgegenhaltungen:
- WO-A1-2013/166536
- DE-U1-202012 102 801
- US-A1- 2004 183 301
- US-A1- 2005 153 593

## Beschreibung

Die Erfindung betrifft eine Fluidleitung-Steckkupplung, mindestens aufweisend ein Kupplungsgehäuse, eine im wesentlichen U-förmige, zwei Federschenkel und einen Verbindungsbogen aufweisende Halteklammer, wobei die Halteklammer in einem Durchgriff des Kupplungsgehäuses derart angeordnet ist, dass die Federschenkel in einer Haltestellung der Halteklammer mindestens teilweise in das Innere des Kupplungsgehäuses hineinragen und einen Kupplungsstutzen, der in das Kupplungsgehäuse einschiebbar ist und eine Kodiernase und einen Kragen aufweist, wobei bei eingestecktem Kupplungsstutzen in Haltestellung der Halteklammer die Federschenkel der Halteklammer hinter dem Kragen des Kupplungsstutzens eingeschnappt sind.

Zur Verbindung von Fluidleitungen im Automobilbau werden häufig Kupplungen eingesetzt, die einen nach VDA (Verband der deutschen Automobilindustrie) standardisierten Anschlussstutzen aufweisen. Entsprechende Muffen müssen dementsprechend auf diesen Stutzen passen.

In der Figur 5 ist eine derartige Kupplung als Stand der Technik gezeigt, wie sie in der DE 10 2006 054 246 A1 offenbart ist. Neben den verschiedenen Komponenten zur Erzeugung einer Fluiddichtigkeit weist eine derartige Kupplung eine Halteklammer T-111 auf, die das Kupplungskörpergehäuse T-102 mit dem Kupplungsstutzen T-105 gegen axiales Auseinanderziehen sichern soll. Diese Klammer T-111 muss beim Einstecken des Kupplungsstutzens T-105 durch den Kegelabschnitt T-108 radial nach außen gedrückt werden und schnappt dann bei eingestecktem Stutzen hinter dem Kragen T-109 ein. Problematisch bei der Montage kann es dabei sein, dass, je nach Federkraft der Klammer T-111, die Einsteckkraft des Stutzens in den Kupplungskörper erschwert ist.

DE 20 2012 102801 U1 offenbart auch eine derartige Fluidleitung-Steckkupplung, aufweisend ein Kupplungsgehäuse, eine im wesentlichen U-förmige, zwei Federschenkel und einen Verbindungsbogen aufweisende Halteklammer, wobei die Halteklammer in einem Durchgriff des Kupplungsgehäuses derart angeordnet ist, dass die Federschenkel in einer Haltestellung der Halteklammer mindestens teilweise in das Innere des Kupplungsgehäuses hineinragen und einen Kupplungsstutzen, der in das Kupplungsgehäuse einschiebbar ist und mindestens eine Kodiernase und einen Kragen aufweist, wobei bei eingestecktem Kupplungsstutzen in Haltestellung der Halteklammer die Federschenkel der Halteklammer hinter dem Kragen des Kupplungsstutzens eingeschnappt sind.

Der Erfindung liegt daher die Aufgabe zugrunde, eine Steckverbindung der eingangs geschilderten Art derart zu verbessern, dass die Einsteckkraft minimiert ist.

Diese Aufgabe wird dadurch gelöst, dass
- das Kupplungsgehäuse im Bereich des Durchgriffs des Kupplungsgehäuses an seiner Außenfläche zwei Anlaufschrägen aufweist, die derart angeordnet sind, dass die Federschenkel mit ihren Enden in einer Anfangsstellung, in der die Halteklammer radial nach außen verschoben ist, im Bereich der Anlaufschrägen zu liegen kommen,
- wodurch die Federschenkel in diesem Zustand über ihre Haltestellung hinaus radial nach außen gespreizt sind, wobei in den Federschenkeln der Halteklammer eine Rücksprungkraft erzeugbar ist, die ein selbsttätiges Zurückgleiten der Halteklammer in die Haltestellung ermöglicht,
- das selbsttätige Zurückgleiten der Halteklammer in die Haltestellung durch einen eine erste und eine zweite Stufe aufweisenden und im Kupplungsgehäuse axial verschiebbar angeordneten Riegel verhinderbar ist,
- wobei der Riegel in seiner ersten Position, seiner Anfangsposition, mit seiner ersten Stufe unter den Verbindungsbogen der Halteklammer greift, und damit das Zurückgleiten der Halteklammer in die Haltestellung unmöglich ist und
- die Kodiernase des Kupplungsstutzens beim Einschieben in das Kupplungsgehäuse gegen den Riegel geführt ist, wodurch beim Einschieben des Kupplungsstutzens der Riegel aus seiner Anfangsposition in eine Normalposition verschiebbar ist,
- bei der der Riegel mit seiner zweite Stufe, deren radiale Dicke geringer ist als die der ersten Stufe, den Verbindungsbogen freigibt, so dass die Halteklammer durch die Rücksprungkraft selbsttätig in ihre Haltestellung positionierbar ist, sodass die Halteklammer hinter den Kragen des Kupplungsstutzens einschnappt und so der Kupplungsstutzen gegen das Kupplungsgehäuse gegen axiales Auseinanderziehen gesichert ist.

Diese Anordnung hat den Vorteil, dass bei der Montage die Schenkel der Halteklammer bereits aufgespreizt sind, so dass die Spreizkraft nicht beim Einschieben des Kupplungsstutzens aufgebracht werden muss. Der Riegel sorgt dabei für eine sichere Positionierung der Halteklammer. Durch die standardmäßig vorhandene Kodiernase des Kupplungsstutzens lässt sich der Riegel mit geringer Kraft verschieben, sodass die Halteklammer über die Anlaufschrägen in ihre Halteposition gleiten kann. Die Montagekraft ist so auf ein sehr geringes Maß reduzierbar.

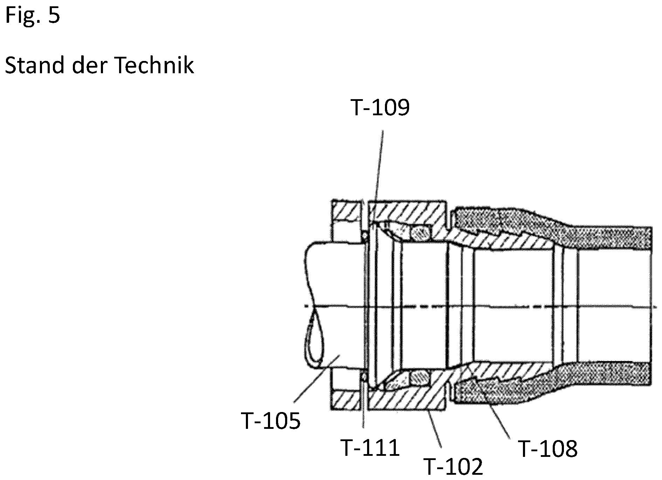

Anhand der Zeichnung wird ein Beispiel der Erfindung näher erläutert. Zur Unterscheidung vom Stand der Technik gemäß Figur 5 beginnen die Bezugszeichen in Figur 5 mit einem "T", welches bei den Figuren 1-4 weggelassen ist.

Es zeigt
Fig. 1 einen Querschnitt eines erfindungsgemäßen Kupplungsgehäuses mit aufgespreizter Halteklammer,
Fig. 2 eine Längsschnitt durch eine erfindungsgemäße Steckkupplung zu Beginn der Montage, in Anfangsposition,
Fig. 3 einen Teillängsschnitt der erfindungsgemäßen Steckkupplung bei beendeter Montage, in Normalstellung,
Fig. 4 einen Querschnitt des erfindungsgemäßen Kupplungsgehäuses mit verriegelter Halteklammer und
Fig. 5 eine VDA-Steckkupplung nach dem Stand der Technik.

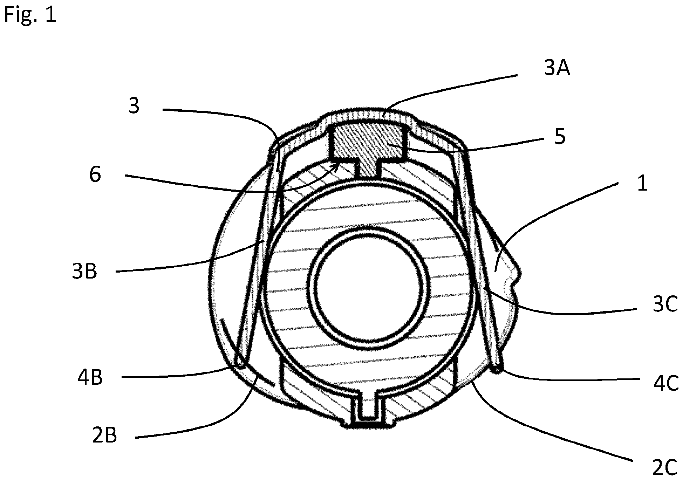

Die Fig. 1 zeigt einen Querschnitt durch ein Kupplungsgehäuse 1 einer erfindungsgemäßen Steckkupplung. Das Kupplungsgehäuse 1 weist zwei radial außen sich gegenüberliegende Anlaufschrägen 2B und 2C auf. Eine Halteklammer 3 weist einen Verbindungsbogen 3A und 2 Federschenkel 3B und 3C auf. Jeder Federschenkel 3B, 3C weist ein dem Verbindungsbogen 3A gegenüberliegendes Ende 4B, 4C auf, die in gezeigtem Zustand vor der Montage an den jeweils zugeordneten Anlaufschrägen 2B, 2C anliegen.

Die Anlaufschrägen 4B, 4C sind derart orientiert, dass durch eine radial nach innen gerichtete, durch die Aufspreizung verursachte Federkraft auch eine Kraftkomponente wirkt, die die Enden 4B, 4C der Federschenkel 3B, 3C in hier gezeigter Orientierung des Kupplungsgehäuses 1 nach unten zieht.

Ein Riegel 5 ist radial zwischen einer Gleitfläche 6 des Kupplungsgehäuses 1 und dem Verbindungsbügel 3A platziert. Der Riegel 5 verhindert ein Gleiten der Halteklammer 3 nach unten.

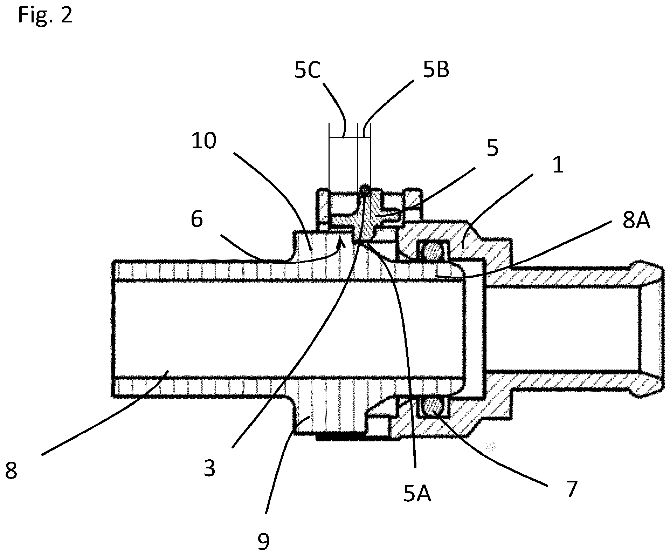

In Figur 2 ist die Steckkupplung in einem Längsschnitt gezeigt. Der Montagezustand entspricht hier dem der Figur 1. Im Kupplungsgehäuse 1 ist eine O-Ring-Dichtung 7 angeordnet. Ein Kupplungsstutzen 8 ist in das Kupplungsgehäuse 1 teilweise eingeschoben. Der Kupplungsstutzen 8 weist zwei Kodiernasen 9 und 10 auf, die dafür sorgen, dass der Stutzen 8 nur in einer vorbestimmten Stellung in das Kupplungsgehäuse 1 einschiebbar ist.

Der Riegel 5 ragt mit einem Anschlag 5A in das Kupplungsgehäuse 1 um ein vorbestimmtes Maß hinein, welches so bemessen ist, dass die Kodiernase 10 beim Einschieben des Kupplungsstutzens 8 mit dem Anschlag 5A in Kontakt bringbar ist. Der Riegel 5 weist einen Bereich 5B und einen Bereich 5C auf. Im Bereich 5B ist die radiale Dicke des Riegels 5 derart bemessen, dass die Halteklammer 3 in der zu Beginn der Montage bestehenden aufgespreizten Stellung verharrt.

Ein Dichtabschnitt 8A ragt in der gezeigten Position in die O-Ring-Dichtung 7 hinein, so das bereits in dieser Position eine fluiddichte Verbindung zwischen Kupplungsstutzen 8 und Kupplungsgehäuse 1 besteht.

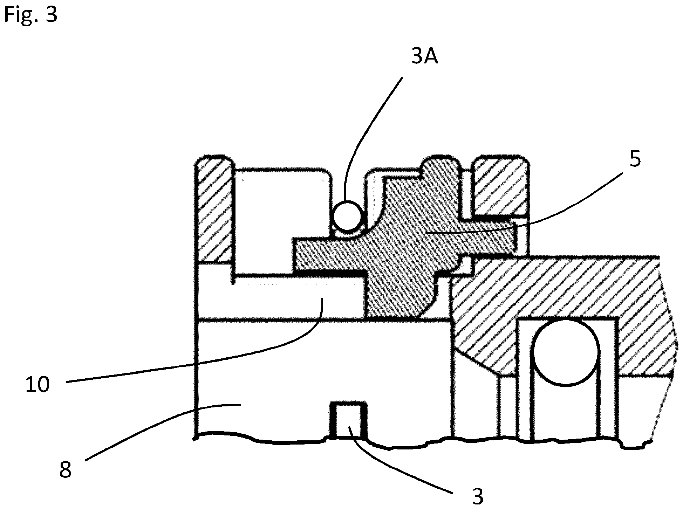

In Figur 3 ist die Verriegelungsstellung der Steckkupplung gezeigt. Der Kupplungsstutzen 8 ist vollständig in das Kupplungsgehäuse 1 eingeschoben. Durch das Einschieben ist der Riegel 5 mittels der Kodiernase 10 axial derart verschoben, dass der Bereich 5C unter dem Verbindungsbogen 3A zu liegen kommt. Durch die geringere Dicke des Bereiches 5C ist die Halteklammer radial in ihrer Normalposition zu liegen gekommen.

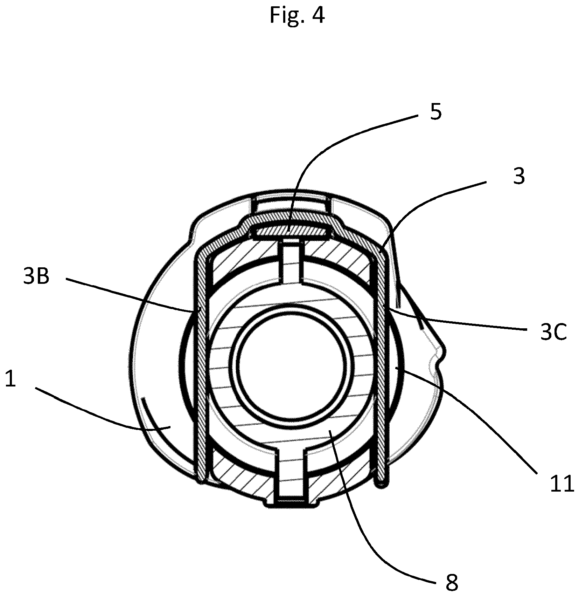

Der in Figur 4 gezeigte Querschnitt repräsentiert den Verriegelungszustand der erfindungsgemäßen Steckkupplung. Die Halteklammer 3 ist durch den verschobenen Riegel 5 freigegeben und liegt nun in ihrer Normalposition. Die Federschenkel 3B und 3C der Halteklammer 3 kommen so hinter einem Kragen 11 des Kupplungsstutzens 8 zu liegen, so das der Kupplungsstutzen 8 im Kupplungsgehäuse verrastet ist.

### Bezugszeichenliste

### (Teil der Beschreibung)

- 1: Kupplungsgehäuse
- 2B, 2C: Anlaufschrägen
- 3: Halteklammer
- 3A: Verbindungsbogen der Halteklammer 3
- 3B, 3C: Federschenkel der Halteklammer 3
- 4B, 4C: Enden der Federschenkel 3B, 3C
- 5: Riegel
- 5A: Anschlag des Riegels 5
- 5B, 5C: Bereiche verschiedener Dicke des Riegels 5
- 6: Gleitfläche im Kupplungsgehäuse 1
- 7: O-Ring-Dichtung
- 8: Kupplungsstutzen
- 8A: Dichtabschnitt des Kupplungsstutzens
- 9, 10: Kodiernasen des Kupplungsstutzens 8
- 11: Kragen des Kupplungsstutzens 8

## Patentansprüche

1. Fluidleitung-Steckkupplung, mindestens aufweisend ein Kupplungsgehäuse (1), eine im wesentlichen U-förmige, zwei Federschenkel (3B, 3C) und einen Verbindungsbogen (3A) aufweisende Halteklammer (3), wobei die Halteklammer (3) in einem Durchgriff des Kupplungsgehäuses (1) derart angeordnet ist, dass die Federschenkel (3B, 3C) in einer Haltestellung der Halteklammer (3) mindestens teilweise in das Innere des Kupplungsgehäuses (1) hineinragen und einen Kupplungsstutzen (8), der in das Kupplungsgehäuse (1) einschiebbar ist und mindestens eine Kodiernase (9, 10) und einen Kragen (11) aufweist, wobei bei eingestecktem Kupplungsstutzen (8) in Haltestellung der Halteklammer (3) die Federschenkel (3B, 3C) der Halteklammer (3) hinter dem Kragen (11) des Kupplungsstutzens (8) eingeschnappt sind, **dadurch gekennzeichnet, dass**
- das Kupplungsgehäuse (1) im Bereich des Durchgriffs des Kupplungsgehäuses (1) an seiner Außenfläche zwei Anlaufschrägen (2B, 2C) aufweist, die derart angeordnet sind, dass die Federschenkel (3B, 3C) mit ihren Enden (4B, 4C) in einer Anfangsstellung, in der die Halteklammer (3) radial nach außen verschoben ist, im Bereich der Anlaufschrägen (2B, 2C) zu liegen kommen,
- wodurch die Federschenkel (3B, 3C) in diesem Zustand über ihre Haltestellung hinaus radial nach außen gespreizt sind, wobei in den Federschenkeln (3B, 3C) der Halteklammer (3) eine Rücksprungkraft erzeugbar ist, die ein selbsttätiges Zurückgleiten der Halteklammer (3) in die Haltestellung ermöglicht,
- das selbsttätige Zurückgleiten der Halteklammer (3) in die Haltestellung durch einen eine erste und eine zweite Stufe (5B, 5C) aufweisenden und im Kupplungsgehäuse (1) axial verschiebbar angeordneten Riegel (5) verhinderbar ist,
- wobei der Riegel (5) in seiner ersten Position, seiner Anfangsposition, mit seiner ersten Stufe (5B) unter den Verbindungsbogen (3A) der Halteklammer (3) greift, und damit das Zurückgleiten der Halteklammer (3) in die Haltestellung unmöglich ist und
- die Kodiernase (10) des Kupplungsstutzens (8) beim Einschieben in das Kupplungsgehäuse (1) gegen den Riegel (5) geführt ist, wodurch beim Einschieben des Kupplungsstutzens (8) der Riegel (5) aus seiner Anfangsposition in eine Normalposition verschiebbar ist,
- bei der der Riegel (5) mit seiner zweiten Stufe (5C), deren radiale Dicke geringer ist als die der ersten Stufe (5B), den Verbindungsbogen (3A) freigibt, so dass die Halteklammer (3) durch die Rücksprungkraft selbsttätig in ihre Haltestellung positionierbar ist, sodass die Halteklammer (3) hinter den Kragen (11) des Kupplungsstutzens (11) einschnappt und so der Kupplungsstutzen (8) gegen das Kupplungsgehäuse (1) gegen axiales Auseinanderziehen gesichert ist.

## Claims

1. Fluid line plug-in coupling, at least having a coupling housing (1), having a substantially U-shaped holding clip (3), which has two spring legs (3B, 3C) and a connecting arch (3A), wherein the holding clip (3) is arranged in a through-passage of the coupling housing (1) in such a way that the spring legs (3B, 3C) project at least partially into the interior of the coupling housing (1) in a holding position of the holding clip (3), and having a coupling connector (8), which can be pushed into the coupling housing (1) and has at least one coding lug (9, 10) and one collar (11), wherein, with the coupling connector (8) plugged in, the spring legs (3B, 3C) of the holding clip (3) are snapped in behind the collar (11) of the coupling connector (8) in the holding position of the holding clip (3), **characterized in that**
- the coupling housing (1) has on its outer surface in the region of the through-passage of the coupling housing (1) two run-on bevels (2B, 2C) which are arranged in such a way that the spring legs (3B, 3C) come to lie with their ends (4B, 4C) in the region of the run-on bevels (2B, 2C) in a starting position, in which the holding clip (3) is displaced radially outwards,
- wherein, in this state, the spring legs (3B, 3C) are spread radially outwards beyond their holding position, wherein a spring-back force can be generated in the spring legs (3B, 3C) of the holding clip (3), which spring force makes it possible for the holding clip (3) to slide back into the holding position automatically,
- the automatic sliding-back of the holding clip (3) into the holding position can be prevented by a latch (5) which has a first and a second step (5B, 5C) and which is arranged so as to be axially displaceable in the coupling housing (1),
- wherein, in its first position, its starting position, the latch (5) engages with its first step (5B) below the connecting arch (3A) of the holding clip (3), and in this way the sliding-back of the holding clip (3) into the holding position is not possible, and,
- during the pushing into the coupling housing (1), the coding lug (10) of the coupling connector (8) is guided towards the latch (5), whereby, during the pushing-in of the coupling connector (8), the latch (5) can be displaced from its starting position into a normal position,
- in which the latch (5) releases the connecting arch (3A) with its second step (5C), the radial thickness of which second step is smaller than that of the first step (5B), such that the holding clip (3) can be positioned automatically into its holding position by way of the spring-back force such that the holding clip (3) snaps in behind the collar (11) of the coupling connector (11) and the coupling connector (8) is consequently secured against axial pulling-apart against the coupling housing (1).

## Revendications

1. Accouplement de conduite de fluide enfichable comportant au moins un boîtier d'accouplement (1), une agrafe de retenue (3) sensiblement en forme de U qui comporte deux branches à ressort (3B, 3C) et un arc de liaison (3A), l'agrafe de retenue (3) étant disposée dans un passage traversant du boîtier d'accouplement (1) de telle sorte que les branches à ressort (3B, 3C) font saillie au moins partiellement à l'intérieur du boîtier d'accouplement (1) dans une position de retenue de l'agrafe de retenue (3) et comporte un embout d'accouplement (8), qui peut être inséré dans le boîtier d'accouplement (1), et au moins un ergot de codage (9, 10) et un collet (11), les branches à ressort (3B, 3C) de l'agrafe de retenue (3) étant encliquetées en arrière du collet (11) de l'embout d'accouplement (8) lorsque l'embout d'accouplement (8) est inséré et que l'agrafe de retenue (3) est dans la position de retenue, **caractérisé en ce que**
- le boîtier d'accouplement (1) comporte sur sa surface extérieure, dans la région du passage traversant du boîtier d'accouplement (1), deux chanfreins (2B, 2C) qui sont disposés de telle sorte que les branches à ressort (3B, 3C) viennent se placer, avec leurs extrémités (4B, 4C) dans une position initiale dans laquelle l'agrafe de retenue (3) est déplacée radialement vers l'extérieur, dans la région des chanfreins (2B, 2C),
- de sorte que les branches à ressort (3B, 3C) dans cet état sont écartées radialement vers l'extérieur au-delà de leur position de retenue, une force de rappel, qui permet à l'agrafe de retenue (3) de retourner automatiquement par glissement dans la position de retenue, pouvant être générée dans les branches à ressort (3B, 3C) de l'agrafe de retenue (3),
- le retour automatique par glissement de l'agrafe de retenue (3) dans la position de retenue peut être empêché par un verrou (5) qui comporte un premier et un deuxième gradin (5B, 5C) et qui peut coulisser axialement dans le boîtier d'accouplement (1),
- le verrou (5) s'engageant dans sa première position, sa position initiale, avec son premier gradin (5B) sous l'arc de liaison (3A) de l'agrafe de retenue (3), et donc le retour par glissement de l'agrafe de retenue (3) dans la position de retenue étant impossible et
- l'ergot de codage (10) de l'embout d'accouplement (8) étant guidé vers le verrou (5) lorsqu'il est inséré dans le boîtier d'accouplement (1) de sorte que, lorsque l'embout d'accouplement (8) est inséré, le verrou (5) puisse être déplacé de sa position initiale à une position normale,
- dans lequel le verrou (5) avec son deuxième gradin (5C), dont l'épaisseur radiale est inférieure à celle du premier gradin (5B), libère l'arc de liaison (3A) de sorte que l'agrafe de retenue (3) puisse être positionnée automatiquement dans sa position de retenue de sorte que l'agrafe de retenue (3) s'encliquète en arrière du collet (11) de l'embout d'accouplement (11) et l'embout d'accouplement (8) est ainsi assuré contre le boîtier d'accouplement (1) contre tout écartement axial.
